Europäisches Patentamt

European Patent Office

Office européen des brevets

(11) Publication number: **0 566 037 A2**

# EUROPEAN PATENT APPLICATION

(21) Application number: 93105844.0

(22) Date of filing: 08.04.93

(51) Int. Cl.5: **C08G 18/79**

(30) Priority: **14.04.92 JP 94596/92**
**14.04.92 JP 94597/92**

(43) Date of publication of application:
**20.10.93 Bulletin 93/42**

(84) Designated Contracting States:
**DE FR GB IT**

(71) Applicant: **TAKEDA CHEMICAL INDUSTRIES,**
**LTD.**
**1-1, Doshomachi 4-chome**
**Chuo-ku, Osaka 541(JP)**

(72) Inventor: **Hirata, Fumiaki**
**39-22, Mozu-umemachi 3-cho**
**Sakai, Osaka 591(JP)**
Inventor: **Shimizu, Hyoe**
**6-2, Katamachi 2-chome,**
**Miyakojima-ku**
**Osaka 534(JP)**
Inventor: **Minato, Ichiro**
**23-5, Hinomine 3-chome,**
**Kita-ku**
**Kobe, Hyogo 651-12(JP)**

(74) Representative: **von Kreisler, Alek et al**
**Patentanwälte**
**von Kreisler-Selting-Werner,**
**Postfach 10 22 41,**
**Bahnhofsvorplatz 1**
**D-50462 Köln (DE)**

(54) Polyisocyanates, their production and use.

(57) A polyisocyanate obtainable by reacting a monohydric alcohol containing 1 to 10 carbon atoms with an aliphatic organic polyisocyanate compound and containing allophanate and isocyanurate structures in an allophanate/isocyanurate molar ratio of 4/1 through 1/10, which is substantially free of the dimer and substantially colorless and has both a sufficiently low viscosity to insure a high-solid system and a high solubility in nonpolar solvents with low toxicity and low pollution potentials.

The polyisocyanate has a high degree of compatibility for various polyols, particularly fluorine-containing polyols and capable of providing the coating film with excellent weather resistance.

Field of the Invention

This invention relates to a polyisocyanate which is suitable for the production of non-yellowing polyurethane resin compositions for coating, ink, adhesive, elastomer and other uses, to a process for the production of said polyisocyanate and to a two-package coating composition containing said polyisocyanate.

Description of the Prior Art

The so-called non-yellowing polyisocyanate has heretofore been used chiefly as the curing component of a two-package urethane coating system in the automobile, rolling stock, architectural materials and other industries. In recent years, however, considerations about environment and ecology protection have made it imperative to develop a high-solid (low volatile content) coating by way of reducing the viscosity of the resin and even to employ a nonpolar solvent with low toxicity and pollution potentials, such as terpene oil, as the coating diluent.

Meanwhile, the curing polyisocyanates so far available commercially are adducts of low molecular weight polyols to organic diisocyanate compounds, biurets obtainable by reacting organic diisocyanate compounds with water and/or a tertiary alcohol, and isocyanurates obtainable by isocyanuration or trimerization of organic diisocyanate compounds. However, these known curing polyisocyanates are sparingly soluble in nonpolar organic solvents such as petroleum-based hydrocarbons and terpene oil and are high in viscosity, so that the object of providing for a high solid content has not been accomplished as yet.

For example, even the isocyanurate-containing polyisocyanate obtainable by the trimerization of hexamethylene diisocyanate, which has a chemically stable isocyanurate structure, comparatively low in viscosity, highly compatible with other resins and highly soluble in nonpolar solvents must be modified, in order to insure a sufficient solubility in a nonpolar solvent, for example with a long-chain diol as taught in JP Kokai No. 61-72013 and JP Kokai 62-209124, among others. However, this procedure entails several problems such as the low isocyanate content of the product polyisocyanate, low drying rate and high application viscosity.

Moreover, it is disclosed in JP Kokai 1-342279 that a long-chain monohydric alcohol-modified isocyanurate-type polyisocyanate is highly soluble in nonpolar solvents, comparatively low in viscosity and well compatible with other resins. However, the use of such an isocyanurate-containing polyisocyanate alone cannot break through the long-standing barrier to low resin viscosity and high solubility in nonpolar solvents. Thus, there is not known a polyisocyanate which would, even in the absence of a solvent, show a viscosity as low as that heretofore attainable only after dilution with a solvent, namely about 100 to 500 centipoises, nor is known a polyisocyanate having a high isocyanate content of, say, about 18 to 21% and yet being soluble in a nonpolar solvent such as terpene oil.

On the other hand, dimerized isocyanates are generally known as low-viscosity polyisocyanates. However, the urethodione group formed by the dimerization of isocyanate groups is thermally unstable and, moreover, because any dimerized isocyanate is bifunctional, it does not insure a sufficient crosslink density, with the result that even if the dimerized isocyanate is used as the curing component of a coating system, for instance, there cannot be realized a practically useful curing performance or cured film characteristics.

As other examples of the curing polyisocyanate, there can be mentioned polyisocyanates containing allophanate groups. Such polyisocyanates are described in, inter alia, British Patent No. 994,890, US Patent No. 4,177,342, No. 4,160,080, No. 3,769,318 and No. 4,810,820, JP Publication No. 46-1711 and No. 49-40860 and so on.

However, despite the proclaimed object of producing the allophanate structure, the polyisocyanates obtained in many of the production examples desclosed contain the thermally unstable unwanted dimer as a reaction byproduct and even have the drawback of causing discoloration of the final product. To be specific, the above literatures disclose mostly the production of allophanate-containing polyisocyanates from bi- or polyfunctional polyols so that the resulting polyols are unsatisfactory in viscosity and/or in solubility in nonpolar solvents.

United States Patent No. 4,810,820, for instance, describes the production of an allophanate-containing polyisocyanate from a monohydric alcohol but the resulting polyisocyanate substantially contains the dimer and is not effective enough in ameliorating discoloration of the final product. Moreover, the resulting polyisocyanate is low in functionality, being theoretically bifunctional, so that like the dimerized isocyanate, does not provide for a sufficient crosslink density. Therefore, when it is used in combination with the polyol which is conventionally used as the resin component of commercial coating systems, for instance, it provides for only inadequate curability and cured film properties.

Brief Summary of the Invention

Having been made to solve the above-mentioned problems of the conventional curing polyisocyanates, the present invention has for its object to provide a polyisocyanate useful for the production of non-yellowing polyurethane resin articles, which is substantially free of the dimer and substantially colorless, has a sufficiently low viscosity insuring the desired high-solid feature and sufficiently high solubilities in low-toxicity, low-pollution nonpolar solvents, has a curing power comparable to that of the conventional curing agent polyisocyanate and is capable of insuring cured properties comparable to those obtainable with the conventional curing polyisocyanate. Another object of the invention is to provide a process for producing said polyisocyanate. Still another object of the invention is to provide a two-package coating composition containing said polyisocyanate.

Detailed Description of the Invention

The polyisocyanate according to this invention is a polyisocyanate obtainable by reacting a monohydric alcohol of 1 to 10 carbon atoms with an aliphatic organic polyisocyanate compound and being characterized by containing allophanate and isocyanurate structures in an allophanate-to-isocyanurate molar ratio of 4:1 through 1:10.

In accordance with this invention, such a polyisocyanate having both allophanate and isocyanurate structures can be obtained by subjecting a monohydric alcohol of 1 to 10 carbon atoms and an aliphatic organic polyisocyanate compound, the latter in stoichiometic excess, to allophanation and isocyanuration reactions in the presence of a catalyst followed by removal of the unreacted organic polyisocyanate compound.

The invention provides for a drastic viscosity decrease, a remarkably improvely solubility in nonpolar solvents and a sufficient crosslink density for the first time through the introduction of both isocyanurate and allophanate structures into a polyisocyanate. This is a surprising result which cannot be anticipated from the state-of-the-art knowledge that polyisocyanates containing polar groups, e.g. urethane, urea and biuret groups, are high in viscosity and low in solubility in nonpolar solvents.

As used throughout this specification, the term 'aliphatic organic polyisocyanate compound' means any and all of aliphatic, alicyclic and araliphatic polyisocyanates and is preferably a polyisocyanate of the general formula (I)

$R(NCO)_x$     (I)

wherein R represents an aliphatic hydrocarbon group containing 2 to 20, preferably 6 to 10, carbon atoms, an alicyclic hydrocarbon group containing 4 to 20, preferably 6 to 15, carbon atoms, or an araliphatic hydrocarbon group containing 8 to 14, preferably 8 to 12, carbon atoms; x represents a number equal to 2 through 4.

The organic polyisocyanate compound as such includes, among others, ethylene diisocyanate, tetramethylene diisocyanate, hexamethylene diisocyanate, undecamethylene diisocyanate, 2,2,4- or 2,4,4-trimethyl-1,6-diisocyanatohexane, isocyanatomethyl-3,5,5-trimethylcyclohexyl isocyanate, 1,3-diisocyanatocyclobutane, 1,4-diisocyanatocyclohexane, 4,4'-diisocyanatodicyclohexylmethane, 1,2-bis-(isocyanatomethyl)cyclobutane, trimethylhexane-1,6-diisocyanate, 1,11-diisocyanatoundecane, 3-isocyanatomethyl-3,5,5-trimethylcyclohexyl isocyanate, 4,4'-cyclohexane diisocyanate, isopropylidenebis(4-cyclohexyl) isocyanate, 1,3-bis(isocyanatomethyl)cyclobutane, bis(isocyanatomethyl)norbornane (mixture of isomers), 3(4),8(9)-diisocyanatomethyltricyclo(5,2,1,2,6)decane, m- or p-xylylene diisocyanate, tetramethylxylylene diisocyanate, 4,4-bis(isocyanatomethyl)diphenylmethane, 1,12-dodecane diisocyanate, lysine diisocyanate ($C_1$-$C_8$ alkyl esters), 1,3-diisocyanatocyclohexane, 1,3- or 1,4-diisocyanatomethylcyclohexane, 1-isocyanato-3,3,5-trimethyl-5-isocyanatomethylcyclohexane(isophorone diisocyanate) and so on.

Among these organic polyisocyanate compounds, hexamethylene diisocyanate, 1,3-diisocyanatomethylcyclohexane and isophorone diisocyanate are particularly useful for purposes of this invention and particularly for insuring a decreased viscosity of the product polyisocyanate, hexamethylene diisocyanate can be employed with the greatest advantage. Thus, when this invention is carried into practice by using hexamethylene diisocyanate as the starting organic polyisocyanate compound, there can be obtained a polyisocyanate which shows, in a condition substantially free of the unreacted organic polyisocyanate compound and any solvent therein, a viscosity of not more than 500 centipoises at 25°C.

3

The monohydric alcohol of 1 to 10 carbon atoms, which may optionally contain polar groups such as an unsaturated bond, ether bond or ester bond, is preferably selected from among aliphatic, alicyclic or aralicyclic alcohols such as methanol, ethanol, n-propanol, isopropyl alcohol, butyl alcohols, allyl alcohol, pentanol, hexanol, heptanol, 2-ethylhexanol, n-octanol, nonanol, n-decanol, cyclopentanol, cyclohexanol, furfuryl alcohol, benzyl alcohol, etc., ether group-containing monohydric alcohols which are addition polymers of any of said monohydric alcohols with alkylene oxide such as ethylene oxide, propylene oxide, etc. (random and/or block polymers with two or more different alkylene oxides), ester group-containing monohydric alcohols which are addition polymers of any low molecular weight monohydric alcohols with a lactone such as $\epsilon$-caprolactone, $\delta$-valerolactone, etc., and ester group-containing monohydric alcohols which are adducts of alkylene oxide to monocarboxylic acids such as acetic acid, propionic acid, benzoic acid, and so on.

Preferred for purposes of this invention are aliphatic monohydric alcohols containing 1 to 4 carbon atoms, which give polyisocyanates with a particularly high NCO content and a low viscosity.

However, in this invention, monohydric alcohols containing more than 10 carbon atoms can also be used in combination with said $C_{1-10}$ monohydric alcohols. Moreover, even polyhydric alcohols such as dihydric and trihydric alcohols in a minor proportion can be used in combination with said $C_{1-10}$ monohydric alcohols. In addition, where necessary, such active hydrogen compounds as thiols, oximes, lactams, phenols, $\beta$-diketones, etc. can also be employed in combination with said monohydric alcohols.

The polyisocyanate according to this invention can be produced by subjecting said $C_{1-10}$ monohydric alcohol and said aliphatic organic polyisocyanate compound, the latter in stoichiometric excess, to allophanation and isocyanuration reactions in the presence of a catalyst followed by removal of the unreacted organic polyisocyanate compound.

The resulting polyisocyanate containing allophanate and isocyanurate structures is substantially free of the thermally unstable dimer and substantially colorless.

The polyisocyanate having allophanate and isocyanurate structures in accordance with the invention can be produced by the following and other processes.

A first process comprises blending an allophanate-containing polyisocyanate obtained by subjecting said starting materials to allophanation reaction in the presence of a catalyst with an isocyanurate-containing polyisocyanate obtained by subjecting said starting compounds to isocyanuration reaction in the presence of a catalyst. In this process, the unreacted organic polyisocyanate compound is removed either before or after blending of the allophanate-containing polyisocyanate with the isocyanurate-containing polyisocyanate. A second process comprises subjecting said starting materials to allophanation and isocyanulation reactions in the presence of a catalyst and thereafter removing the untreated organic polyisocyanate compound. Particularly from the standpoint of production efficiency and qualitative stability, the polyisocyanate obtained by the second process is preferred for purposes of this invention.

Prior to subjecting said organic polyisocyanate compound and monohydric alcohol to allophanation and isocyanuration reactions, some or all of the hydroxyl groups in said monohydric alcohol may be preliminarily reacted with some of the isocyanato groups in said organic polyisocyanate compound to form urethane groups.

Regarding the proportions of the organic polyisocyanate compound and monohydric alcohol to be used in the practice of this invention, the NCO/OH ratio is preferably about 5 through 100 and, for still better results, about 10 through 50. If the NCO/OH ratio is less than 5, the resulting polyisocyanate may have only a low isocyanate content or a high viscosity. On the other hand, if the NCO/OH ratio exceeds 100, the product polyisocyanate may have only a low allophanate content and may not be low enough in viscosity and sufficiently soluble in nonpolar solvents.

The reaction between the monohydric alcohol and the organic polyisocyanate compound can be carried out in a solvent or in the absence of a solvent. When a solvent is employed, it must be inert to the isocyanate group.

The catalyst for use in the reaction between the monohydric alcohol and the organic polyisocyanate compound should be a substance which provides for ease of reaction control, least discoloration of the final product and minimal formation of the thermally unstable dimer. As examples of such catalyst, there can be mentioned the hydroxides or organic weak acid salts of tetralkylammonium such as tetramethylammonium, tetraethylammonium, tetrabutylammonium, trimethylbenzylammonium, etc.; the hydroxide or organic weak acid salts of trialkylhydroxyalkylammonium such as trimethylhydroxypropylammonium, trimethylhydroxyethylammonium, triethylhydroxypropylammonium, triethylhydroxyethylammonium, etc.; alkali metal salts of alkanecarboxylic acids such as acetic acid, caproic acid, octylic acid, myristic acid, etc.; the tin, zinc, lead and other metal salts of said alkanecarboxylic acids, metal chelates of $\beta$-diketones such as aluminum acetylacetone, lithium acetylacetone, etc., Friedel-Crafts catalysts such as aluminum chloride, boron trifluoride, etc.; various organometal compounds such as titanium tetrabutyrate, tributylantimony oxide, etc.; and aminosilyl compounds such as hexamethylsilazane and so on. Among these catalysts, quaternary ammonium compounds such as the hydroxide or an organic weak acid salt of a tetralkylammonium and the hydroxide or an organic weak acid salt of a trialkylhydroxyammonium are preferred.

Depending on its species as well as the reaction temperature, etc., the catalyst is used generally in a proportion of about 0.0001 to 1% weight relative to the organic polyisocyanate compound.

The allophanation and isocyanuration reactions in accordance with the present invention are carried out in the temperature range of generally about 20 to 160°C and preferably about 40 to 100°C.

The conversion rate, namely the allophanation and isocyanuration rate, in this invention is preferably about 10 to 60 weight % and, for still better results, about 15 to 40 weight % based on the total amount of organic polyisocyanate and monohydric alcohol. If the conversion rate exceeds about 60%, the product polyisocyanate tends to be too high in molecular weight, too low in solubility, compatibility and isocyanate content, and too high in viscosity.

When the reaction has proceeded to the target conversion rate, an acidic catalyst poison such as phosphoric acid, benzoyl chloride, monochloroacetic acid, dodecylbenzanesulfonic acid or the like is added to the reaction system to deactivate the catalyst and, then, the unreacted organic polyisocyanate compound is removed to recover the polyisocyanate of the invention.

In the polyisocyanate of the present invention, the allophanate-isocyanurate molar ratio is 4/1 through 1/10, preferably 2/1 through 1/2. If the allophanate-isocyanurate molar ratio exceeds 4/1, such polyisocyanates would not have sufficient functionality and be also inadequate in curing performance and cured film characteristics. On the other hand, if said ratio is less than 1/10, the contemplated effects, namely low viscosity and solubility in nonpolar solvents, will not be obtained.

The allophanate/isocyanurate-containing polyisocyanate of the invention is remarkably low in viscosity as compared with the hitherto-known curing polyisocyanates. For example, the polyisocyanate of the present invention can be provided in the viscosity range of not more than about 200 centipoises as determined at 25°C after dilution with ethyl acetate to a nonvolatile content of 75% by weight.

Particularly, as pointed out hereinbefore, when hexamethylene diisocyanate is used as said organic polyisocyanate, it is possible to provide a polyisocyanate with a viscosity of not more than about 500 centipoises, particularly not more than 300 centipoises, as determined at 25°C in a condition substantially not containing the free polyisocyanate compound and solvent. Therefore, such a polyisocyanate can be used undiluted with a solvent in various applications such as paints, adhesives, casting, and so on. Thus, the desired high-solid resin system can be obtained.

Furthermore, the polyisocyanate of the present invention is highly soluble in low-toxicity nonpolar solvents and when a suitable monohydric alcohol is selectively employed, it can be blended with a low-toxicity nonpolar solvent in optional proportions without development of turbidity even in the low temperature range of -5°C to 5°C.

As examples of said nonpolar solvent, there can be mentioned low-toxicity, weak-solubilizing nonpolar organic solvents having aniline points in the range of 10 to 70°C, preferably about 12 to 65°C, such as aliphatic or naphthenic hydrocarbon organic solvents and vegetable oils represented by terpene oil.

As typical examples of such nonpolar organic solvent, there can be mentioned various petroleum-based hydrocarbon organic solvents such as HAWS (Shell Chemical, aniline point 15°C), Swasol 310 (Maruzen Petroleum, aniline point 16°C), Esso Naphtha No. 6 (Exon Chemical, aniline point 43°C), LAWS (Shell Chemical, aniline point 43°C), Esso Naphtha No. 5 (Exon Chemical, aniline point 55°C), Pegasol 3040 (Mobile Oil, aniline point 55°C) and so on. In addition, methylcyclohexane (aniline point 40°C), ethylcyclohexane (aniline point 44°C), and gum turpentine N (Yasuhara Oil and Fat, aniline point 27°C) and other terpene oils.

The curing isocyanate of the present invention is chiefly used in combination with various known polyols in coatings, adhesives, building materials, molding materials and so on.

The preferred polyols are those containing at least 2 hydroxyl groups per molecule, such as alkyd polyols, acrylic polyols, acrylated alkyd polyols, polyether polyols, polyester polyols, polybutadiene oligomers, fluorine-containing polyols, silicon-containing polyols and so on.

When a nonpolar solvent is used as the diluent, the polyol component is preferably a polyol which is either soluble in the solvent or having a certain degree of affinity or dispersibility with respect to the solvent. Thus, an alkyd polyol with an oil length of not less than 40%, an akyd polyol containing a monomer unit having a high affinity for nonpolar organic solvents, such as p-t-butylbenzoic acid, and an acrylic polyol containing a monomer unit having a high affinity for nonpolar organic solvents, such as isobutyl methacrylate, 2-ethylhexyl methacrylate, etc., preferably an acrylic polyol with an alkyd content of not less than 10%.

5

Moreover, in the production of a high-solid coating composition, acrylic oligomer polyols prepared by the group transfer polymerization method (O. W. Webster et al., J. Am. Chem. Soc., 105, 5706 (1983) or the like technique can also be employed.

The fluorine-containing polyol, particularly, the fluorine-containing polyol having two or more hydroxyl groups per molecule, which is to be employed in the present invention, includes a variety of polyols soluble in organic solvents, such as polyols based on fluorolefins such as those described in JP Kokai 57-34107, Kokai 57-34108, Kokai 61-200145, Kokai 61-275311, Kokai 61-272212, Kokai 59-189108, Kokai 60-28458, Kokai 60-67517, Kokai 61-51045, Kokai 61-176620, Kokai 62-7767, Kokai 4-28707, etc., modification products of the above fluorolefin-based fluorine-containing polyols such as those described in JP Kokai 59-41321, Kokai 59-96177, Kokai 60-137950, Kokai 61-36374, Kokai 61-118466, Kokai 60-1267, etc., polyols based on unsaturated monomers having fluorine-containing side-chain groups such as those described in JP Kokai 58-34866 etc. and modification products thereof. As such fluorine-containing polyols, there can be employed commercial products such as Lumiflon LF-100, LF-200, LF-300, LF-601, etc., which are available from Asahi Glass Co., Ltd. and K-700, K-701, etc. which are available from Dainippon Ink and Chemicals, Inc.

The proportions of said polyisocyanate and fluorine-containing polyol in a coating system according to this invention are preferably about 1/5 through about 2/1 in terms of NCO/OH ratio. If this molar ratio is less than 1/5, the resulting film may not be as good as desired in weather resistance and solvent resistance. On the other hand, if the ratio exceeds 2/1, the drying rate may not be as fast as desired.

The coating composition of the invention may be supplemented with various additives which are commonly used in polyurethane coatings, such as a cure accelerator catalyst, ultraviolet absorber, oxidation inhibitor, leveling agent and so on.

The polyisocyanate of the present invention is so low in viscosity that it is effective in reducing solvent requirements. For example, when this polyisocyanate is diluted with ethyl acetate to a solids content of 75% by weight, its viscosity can be reduced to about 200 centipoises or less. Moreover, because it is highly soluble in a low-toxicity nonpolar solvent, the polyisocyanate of the invention permits the use of such a solvent as the diluent, thus contributing to improved working environments and a lower level of pollution. Moreover, in respect of the performance characteristics of polyurethane compositions, a broad latitude is available according to starting materials, namely the organic polyisocyanate and monohydric alcohol.

Particularly the polyisocyanate of the invention as obtainable by using hexamethylene diisocyanate as the starting organic polyisocyanate compound can be adapted to provide a viscosity of not more than about 500 centipoises, preferably not more than about 300 centipoises, as determined at 25°C in a condition substantially free of the unreacted organic polyisocyanate compound and solvent and such a polyisocyanate of low viscosity can be used undiluted with a solvent as the curing component of a coating system or an adhesive system. Moreover, with its improved flexibility, i.e. improved impact resistance and flexural strength, this polyisocyanate can be used with advantage as the polyisocyanate component of a molding system, particularly a casting composition or a potting composition.

Furthermore, the polyisocyanate of the invention in which the terminal isocyanate function has been blocked with an oxime, lactam, phenol, β-diketone or the like can be used in combination with an optional kind of polyol to provide a one-package baked-on type coating composition, particularly an acid-resistant paint for the line coating of automobiles, for instance.

The polyisocyanate has a high degree of compatibility with the fluorine-containing polyol, the urethane coating composition of the invention is not only homogeneous and clear but forms a highly weather-resistant film. Moreover, this coating system provides for a great freedom in the design of workability and physical parameters, such as viscosity, drying rate, curability, flexibility of cured film and so on.

The following examples are intended to illustrate the invention in further detail and should by no means be construed as defining the metes and bounds of the invention. In the following disclosure, % means % by weight unless otherwise specified.

Example 1

A 500 ml four-necked flask equipped with a stirrer, thermometer, nitrogen gas inlet and Dimroth condenser was charged with 490 g of 1,6-hexamethylene diisocyanate (briefly, HDI) and 10 g of methanol and the charge was heated under a nitrogen blanket at 80°C for 2 hours. Then, as the catalyst, 0.03 g of trimethyl-N-2-hydroxypropylammonium 2-ethylhexanoate was added.

With the reaction temperature being controlled at 80 ± 5°C, the reaction was continued for 1 hour, at the end of which time 0.05 g of benzoyl chloride was added to the reaction mixture to deactivate the catalyst and stop the reaction. The reaction mixture was then subjected to thin-film distillation (degree of vacuum: 0.5 mmHg, temperature 140°C) to remove the unreacted HDI and thereby provide 135 g (27% conversion) of a light yellow, clear polyisocyanate according to the invention.

This polyisocyanate had an APHA color number of 20-30, a viscosity (BL viscosimeter) of 250 centipoises at 25°C, an NCO content of 21.6% and a free HDI content of 0.2%. NMR analysis revealed substantially no urethane group, with the allophanate/isocyanurate molar ratio being about 5/4.

Compared with the polyisocyanate of Comparative Examples which appear hereinafter, this polyisocyanate is not only remarkably low in viscosity but has a high NCO content so that it can be used without dilution as the curing component of a two-package urethane coating system.

The above polyisocyanate was added to a coating resin based on an acrylic polyol (Dainippon Ink and Chemicals, Acrydic A-801) as the curing agent in an equimolar amount and the curability and film characteristics of the resulting composition were investigated. The results are set forth in Table 1. It can be seen from Table 1 that the addition of the polyisocyanate of the invention as the curing component to a polyol-based coating resin provides a coating system which is very desirable in curability and film characteristics.

The curability and film characteristics were evaluated using samples prepared by spray-coating a zinc phosphate-bonderized steel sheet with the coating composition in an average coating thickness of 40±5 μm and drying the coat at 25°C and 60% RH for 7 days.

Example 2

Using 479 g of HDI and 21 g of isobutyl alcohol in lieu of methanol, the procedure of Example 1 was repeated to provide 150 g (30% conversion) of a light yellow, clear polyisocyanate.

This polyisocyanate had an APHA color number of 30, a viscosity of 260 centipoises at 25°C, an NCO content of 20.1% and a free HDI content of 0.2%. NMR analysis revealed substantially no urethane group, with the allophanate/isocyanurate molar ratio being about 1/1.

Compared with the isocyanates of Comparative Examples which appear hereinafter, the above polyisocyanate is remarkably lower in viscosity and has a high NCO content. Therefore, as in Example 1, this polyisocyanate was added in an equimolar amount to an acrylic polyol based two-package coating resin as the curing component and the curability and film performance were evaluated. The results are set forth in Table 1. It is apparent from the data that the use of the polyisocyanate of the invention as the curing component of a polyol-based coating system provides a coating system very satisfactory in curability and film characteristics. The dilution factor in terpene oil, a nontoxic nonpolar solvent, was 240%. The terpene oil dilution factor is defined by (the maximum amount of terpene oil which does not produce turbidity)/(polyisocyanate composition) x 100(%).

Example 3

Using 464 g of HDI and 36 g of 2-ethylhexanol in lieu of methanol, the procedure of Example 1 was otherwise repeated to provide 160 g (32% conversion) of a light yellow, clear polyisocyanate.

This polyisocyanate had an APHA color number of 30, a viscosity of 380 centipoises at 25°C, an NCO content of 18.0% and a free HDI content of 0.3%. NMR analysis revealed substantially no urethane group, with the allophanate/isocyanurate molar ratio being about 1/1.

Compared with the polyisocyanate of Comparative Examples which appear hereinafter, this polyisocyanate is not only remarkably low in viscosity but has a high NCO content so that it can be used without dilution as the curing component of a two-package urethane coating system.

As in Example 1, this polyisocyanate was added in an equimolar amount to an acrylic polyol based two-package coating resin as the curing component and the curability and film performance were evaluated. The results are set forth in Table 1. It is apparent that both the curability and cured film characteristics are excellent.

The terpene oil dilution factor of the above polyisocyanate was 460.

Example 4

A 500 ml four-necked flask equipped with a stirrer, thermometer, nitrogen gas inlet and Dimroth condenser was charged with 492 g of 1,3-diisocyanatomethylcyclohexane (briefly, H6XDI) and 8 g of methanol and the charge was heated under a nitrogen blanket at 80°C for 2 hours. Then, as the catalyst, 0.05 g of trimethyl-N-2-hydroxyethylammonium hydroxide (choline) was added.

With the reaction temperature being controlled at 85 ± 5°C, the reaction was continued for 2 hours, at the end of which time 0.05 g of benzoyl chloride was added to the reaction mixture to deactivate the catalyst and stop the reaction. The reaction mixture was then subjected to thin-film distillation (degree of vacuum: 0.5 mmHg, temperature 150°C) to remove the unreacted H6XDI and thereby provide 140 g (28% conversion) of a viscous, light yellow, clear polyisocyanate. This polyisocyanate had an NCO content of 19.3% and a free $H_6XDI$ content of 0.3%.

NMR analysis revealed substantially no urethane group, with the allophanate/isocyanurate molar ratio being about 4/3. A solution of this polyisocyanate as prepared using ethyl acetate as the diluent to a solids content of 75% showed an APHA color number of 30 and a viscosity of 30 centipoises at 25°C.

A solution of the same polyisocyanate as prepared using terpene oil as the diluent to a solids content of 75% had a viscosity of 480 centipoises at 25°C and remained homogeneous and clear without turbidity even at 0°C. The terpene oil dilution factor was not less than 2000%.

As in Example 1, this polyisocyanate was added in an equimolar amount to an acrylic polyol based two-package coating resin as the curing component and the curability and film performance were evaluated. The results are set forth in Table 1. The curability and cured film characteristics of the resulting coating were both satisfactory.

Example 5

A 500 ml four-necked flask equipped with a stirrer, thermometer, nitrogen gas inlet and Dimroth condenser was charged with 483 g of isophorone diisocyanate (briefly, IPDI) and 17 g of isobutyl alcohol and the charge was heated under a nitrogen blanket at 85°C for 3 hours. Then, as the catalyst, 0.1 g of trimethylbenzylammonium hydroxide was added.

With the reaction temperature being controlled at 90 ± 5°C, the reaction was continued for 3 hours, at the end of which time 0.1 g of benzoyl chloride was added to the reaction mixture to deactivate the catalyst and stop the reaction. The reaction mixture was then subjected to thin-film distillation (degree of vacuum: 0.5 mmHg, temperature 170°C) to remove the unreacted IPDI and thereby provide 140 g (28% conversion) of a light yellow, clear polyisocyanate which was not fluid at room temperature.

NMR analysis revealed substantially no urethane group, with the allophanate/isocyanurate molar ratio being about 3/2. A solution of this polyisocyanate as prepared using ethyl acetate as the diluent to a solids content of 75% showed an APHA color number of 80, a viscosity of 100 centipoises at 25°C, an NCO content of 11.6% and a free IPDI content of 0.4%.

A solution of the same polyisocyanate as prepared using terpene oil as the diluent to a solids content of 75% had a viscosity of 2500 centipoises at 25°C and remained homogeneous and clear without turbidity even at 0°C. The terpene oil dilution factor was not less than 2000%.

As in Example 1, this polyisocyanate was added in an equimolar amount to an acrylic polyol based two-package coating resin as the curing component and the curability and film performance were evaluated. The results are set forth in Table 1. The curability and cured film characteristics of the resulting coating were both satisfactory.

Example 6

Using 482 g of HDI and 18 g of n-propanol in lieu of methanol, the procedure of Example 1 was otherwise repeated to provide 140 g (28% conversion) of a light yellow, clear polyisocyanate.

This polyisocyanate had an APHA color number of 30, a viscosity of 280 centipoises at 25°C, an NCO content of 20.8% and a free HDI content of 0.3%. NMR analysis revealed substantially no urethane group, with the allophanate/isocyanurate molar ratio being about 1/1.

Compared with the polyisocyanate of Comparative Examples which appear hereinafter, this polyisocyanate is not only remarkably low in viscosity but has a high NCO content so that it can be used without dilution as the curing component of a two-package urethane coating system.

As in Example 1, this polyisocyanate was added in an equimolar amount to an acrylic polyol based two-package coating resin as the curing component and the curability and film performance were evaluated. The results are set forth in Table 1. It is apparent that both the curability and cured film characteristics are excellent.

The terpene oil dilution factor of the above polyisocyanate was 310.

Table 1

|  | Example | | | | | |
|---|---|---|---|---|---|---|
|  | 1 | 2 | 3 | 4 | 5 | 6 |
| Set to touch (min/25°C) | 4 | 4 | 4 | 4 | 4 | 4 |
| Print-free (hr./25°C) | 15 | 15 | 16 | 7 | 3 | 15 |
| Pencil hardness | F | F | F | H | H | F |
| Erichsen (mm) | 8 | 8 | 8 | 8 | 6 | 8 |
| Cross-hatch (x 1/100) | 100 | 100 | 100 | 100 | 100 | 100 |
| Impact resistance | 50 | 50 | 50 | 40 | 30 | 50 |
| Flexure resistance (mm) | 2 | 2 | 2 | 2 | 6 | 2 |
| Tensile strength (Kgf/cm$^2$) | 570 | 610 | 590 | 710 | 590 | 580 |
| Elongation (%) | 10 | 10 | 11 | 7 | 6 | 10 |

Comparative Example 1

A 500 ml four-necked flask equipped with a stirrer, thermometer, nitrogen gas inlet and Dimroth condenser was charged with 452 g of HDI under a nitrogen gas blanket and 48 g of trimethylolpropane (TMP) was added dropwise at 70°C for 1 hour. The mixture was further reacted at 80°C for 2 hours.

Using a thin-film distiller, the reaction mixture obtained above was purified as in Example 1 to give 210 g (42% conversion) of a light yellow, clear adduct polyisocyanate which was not fluid at room temperature.

A solution of this polyisocyanate as prepared using ethyl acetate as the diluent to a solids content of 75% showed a viscosity of 260 centipoises at 25°C, an NCO content of 12.5% and a free HDI content of 0.3%.

This adduct polyisocyanate could be diluted with a polar solvent but could not be diluted with terpene oil, which is a nonpolar solvent, and the terpene oil dilution factor was not more than 10%.

Comparative Example 2

A 500 ml four-necked flask equipped with a stirrer, thermometer, nitrogen gas inlet and Dimroth condenser was charged with 382 g of HDI, 4 g of water and, as the solvent, 114 g of methylcellosolve acetate and the reaction was conducted under a nitrogen gas blanket at 150°C for 2 hours.

Using a thin-film distiller, the reaction mixture obtained above was purified as in Example 1. This biuret polyisocyanate had a viscosity of 1300 centipoises at 25°C, an NCO content of 23.5% and a free HDI content of 0.2%.

This biuret polyisocyanate could be diluted with a polar solvent but could not be diluted with terpene oil, which is a nonpolar solvent, and the terpene oil dilution factor was not more than 10%.

Comparative Example 3

Using 487 g of HDI and 13 g of 1,3-butanediol, the procedure of Example 1 was otherwise repeated to provide 150 g (30% conversion) of a light yellow, clear product.

This polyisocyanate had an APHA color number of 30, a viscosity of 2250 centipoises at 25°C, an NCO content of 20.8% and a free HDI content of 0.3%.

Compared with the polyisocyanates of Examples 1, 2 and 3, this polyisocyanate had a high viscosity and could not be diluted with terpene oil. Its terpene oil dilution factor was not more than 10%.

Reference Example 1

(Production of a fluorine-containing polyol)

A one-liter stainless steel autoclave equipped with a stirrer was charged with 400 ml of ethyl acetate solvent, 0.8 g of vinyl pivalate (briefly, VPI) and 0.7 g of 4-hydroxybutylvinyl ether (briefly, HBVE). After nitrogen gas purging, 17.5 g of tetrafluoroethylene (briefly, TFE) and 133.0 g of vinylidene fluoride (briefly, VDF) were added and the temperature was increased to 40°C.

The autoclave was further charged with 0.6 g of diisopropyl peroxycarbonate (briefly, IPP) to initiate polymerization. As the pressure fell, 50.2 g of VDF/TEE (mol ratio: 90/10) and 24.5 g of HBVE/VPI (mole ratio: 1/1) were added and the polymerization reaction was continued with addition of 2.5 g of IPP in appropriate times. After 18 hours of polymerization reaction, the reaction was stopped, the unreacted monomers were purged off and the polymer slurry was precipitated in hexane. The precipitate was washed and dried to provide 100.3 g of a fluorine-containing copolymer polyol.

The weight average molecular weight of this fluorine-containing polyol as determined by the GPC method (polystyrene standard) was 12000. $^{19}$F-NMR and $^1$H-NMR analyses showed that the composition of this fluorine-containing polyol was VDF/TFE/VPI/HBVE = 75/11/7/7. This fluorine-containing polyol was dissolved in ethyl acetate to a solids content of 50% for use as the two-package coating polyol component with a hydroxyl value of 26.

The polyisocyanate obtained in Example 1 was mixed with the fluorine-containing polyol obtained in Reference Example 1 in an NCO/OH ratio of 1/1. This composition was coated on a substrate in a dry film thickness of 100 μm and the clarity of the film was examined after setting to the touch and after drying print-free. On either occasion, the film was uniformly clear without clouding.

The polyisocyanates obtained in Examples 1 through 6 and Comparative Examples 1 through 3 were respectively used in combination with the fluorine-containing polyol obtained in Reference Example 1 and the clarity of the each film was evaluated after setting to the touch and after drying print-free. The results are shown in Table 2.

## Table 2

| | Polyisocyanate | Clarity of film | |
| --- | --- | --- | --- |
| | | After setting to touch | After drying print-free |
| Example 1 | | Clear | Clear |
| 2 | | Clear | Clear |
| 3 | | Clear | Clear |
| 4 | | Clear | Clear |
| 5 | | Clear | Clear |
| 6 | | Clear | Clear |
| Comparative Example 1 | | Opaque | Opaque |
| 2 | | Opaque | Translucent |
| 3 | | Translucent | Translucent |

The curability and film characteristics of the compositions obtained in Examples 1 through 6, which gave clear films, were evaluated. The results are set forth in Table 3. The curability and film characteristics were evaluated using samples prepared by spray-coating zinc phosphate-bonderized steel sheets with the respective coating compositions in an average coating thickness of 40 ± 5 μm and drying the coats at 25°C and 60 RH for 7 days.

Table 3

| | Example | | | | | |
|---|---|---|---|---|---|---|
| | 1 | 2 | 3 | 4 | 5 | 6 |
| Set to touch (min/25 °C) | 4 | 4 | 4 | 4 | 4 | 4 |
| Print-free (hr./25 °C) | 15 | 16 | 13 | 8 | 5 | 15 |
| Pencil hardness | B | B | F | HB | HB | B |
| Erichsen (mm) | 8 | 8 | 8 | 8 | 8 | 8 |
| Cross-hatch (x 1/100) | 100 | 100 | 100 | 100 | 100 | 100 |
| Impact resistance | 100 | 100 | 100 | 80 | 50 | 100 |
| Flexure resistance (mm) | 2 | 2 | 2 | 2 | 4 | 2 |
| Tensile strength (Kgf/cm$^2$) | 505 | 495 | 513 | 524 | 550 | 500 |
| Elongation (%) | 10 | 10 | 9 | 8 | 6 | 11 |

It can be seen from Table 3 that the films obtained from the coating compositions of the invention have sufficient strength and hardness and that by varying the composition of the polyisocyanate component, a broad range of charyacteristics can be implemented.

## Claims

1. A polyisocyanate obtainable by reacting a monohydric alcohol containing 1 to 10 carbon atoms with an aliphatic organic polyisocyanate compound, which polyisocyanate is characterized by containing both allophanate and isocyanurate structures in an allophanate/isocyanurate molar ratio of 4:1 through 1:10.

2. The polyisocyanate claimed in claim 1, which is obtainable by reacting a monohydric alcohol with hexamethylene diisocyanate and has a viscosity of not more than 500 centipoises as measured at 25 °C in a condition substantially free of the unreacted hexamethylene diisocyanate and any solvent.

3. The polyisocyanate claimed in claim 1, wherein the monohydric alcohol is one containing 1 to 5 carbon atoms.

4. The polyisocyanate claimed in claim 1, wherein the aliphatic organic polyisocyanate compound is a polyisocyanate of the general formula

   R(NCO)x

   wherein R represents an aliphatic hydrocarbon group containing 2 to 20 carbon atoms, an alicyclic hydrocarbon group containing 4 to 20 carbon atoms or an araliphatic hydrocarbon group containing 8 to 14 carbon atoms; X represents a number equal to 2 through 4.

5. The polyisocyanate claimed in claim 4, wherein the aliphatic organic polyisocyate compound is an aliphatic polyisocyanate.

6. The polyisocyanate claimed in claim 5, wherein the aliphatic polyisocyanate is hexamethylene diisocyanate.

7. The polyisocyanate claimed in claim 4, wherein the aliphatic organic polyisocyanate compound is an alicyclic polyisocyanate.

8. The polyisocyanate claimed in claim 7, wherein the alicyclic polyisocyanate is 1,3-diisocyanatomethylcyclohexane or 1-isocyanato-3,3,5-trimethyl-5-isocyanatomethylcyclohexane.

9. The polyisocyanate claimed in claim 1, wherein the NCO/OH ratio of the organic polyisocyanate compound and monohydric alcohol is about 5 through 100.

10. The polyisocyanate claimed in claim 1, wherein the allophanate/isocyanurate molar ratio is 2:1 through 1:2.

11. The polyisocyanate claimed in claim 1, of which viscosity is not more than about 200 centipoises as determined at 25°C after dilution with ethyl acetate to a nonvolatile content of 75%.

12. A process for producing a polyisocyanate which comprises subjecting a monohydric alcohol containing 1 to 10 carbon atoms and an aliphatic organic polyisocyanate compound, in stoichiometric excess with respect to the monohydric alcohol to allophanation and isocyanuration reactions in the presence of a catalyst and, thereafter, removing the unreacted aliphatic organic polyisocyanate.

13. The process for producing a polyisocyanate claimed in claim 12, wherein the NCO/OH ratio of the organic polyisocyanate compound and monohydric alcohol is about 5 through 100.

14. The process for producing a polyisocyanate claimed in claim 12, wherein the catalyst is a hydroxide or an organic weak acid salt of trialkylhydroxyalkyl ammonium.

15. The process for producing a polyisocyanate claimed in claim 12, wherein the catalyst is used in a proportion of about 0.0001 to 1% by weight relative to the organic polyisocyanate compound.

16. The process for producing a polyisocyanate claimed in claim 12, wherein the allophanation and isocyanuration conversion rate is about 10 to 60 weight %.

17. The process for producing a polyisocyanate claimed in claim 12, wherein the allophanation and isocyanuration reactions are carried out in the temperature of about 20 to 160°C.

18. The process for producing a polyisocyanate claimed in claim 12, wherein the allophanate-isocyanurate molar ratio is 2:1 through 1:2.

19. A two-package fluorine-containing coating composition comprising a fluorine-containing polyol having two or more hydroxyl groups per molecule and a polyisocyanate containing both allophanate and isocyanurate structures in an allophanate/isocyanurate molar ratio of 4:1 through 1:10 obtainable by reacting a monohydric alcohol containing 1 to 10 carbon atoms with an aliphatic organic polyisocyanate compound.

20. The two-package fluorine-containing coating composition claimed in claim 19, wherein the polyisocyanate is a polyisocyanate containing both allophanate and isocyanurate structures which is obtainable by reacting a monohydric alcohol with hexamethylene diisocyanate and has a viscosity of not more than 500 centipoises as determined at 25°C in a condition substantially free of the free organic polyisocyanate compound and any solvent.

21. The two-package fluorine-containing coating composition claimed in claim 19, wherein the proportions of the polyisocyanate and fluorine-containing polyol are about 1:5 through about 2:1 in terms of NCO/OH ratio.